## Europäisches Patentamt

## European Patent Office

## Office européen des brevets

(19)

(11) Veröffentlichungsnummer: **0 170 924**
A1

(12) # EUROPÄISCHE PATENTANMELDUNG

(21) Anmeldenummer: 85108603.3

(22) Anmeldetag: 10.07.85

(51) Int. Cl.⁴: **H 02 P 7/00**, G 05 B 19/405

(30) Priorität: 23.07.84 DE 3427127

(43) Veröffentlichungstag der Anmeldung: **12.02.86**
**Patentblatt 86/7**

(84) Benannte Vertragsstaaten: **DE FR GB IT**

(71) Anmelder: **Siemens Aktiengesellschaft, Berlin und München Wittelsbacherplatz 2, D-8000 München 2 (DE)**

(72) Erfinder: **Gose, Horst, Dipl.-Ing., Buckenhofer Weg 32, D-8520 Erlangen (DE)**
Erfinder: **Papiernik, Wolfgang, Dr., Eskilstunastrasse 9, D-8520 Erlangen (DE)**

(54) **Verfahren zur Regleroptimierung für Antriebe.**

(57) Zur Inbetriebnahme von Regelkreisen (2, 3) bei Vorschubantrieben (5) an Werkzeugmaschinen wird das Rechenpotential der numerischen Werkzeugmaschinensteuerung (1) benutzt. Nach Bestimmung der Streckenparameter werden anhand simulierter Regelkreise (7) die optimalen Regelparameter berechnet.

0170924

Siemens Aktiengesellschaft
Berlin und München

Unser Zeichen
VPA 84 P 3 2 7 4 E

## Verfahren zur Regleroptimierung für Antriebe

Die Erfindung bezieht sich auf ein Verfahren zur Regleroptimierung für Antriebe bei Werkzeugmaschinen mit Rechnersteuerung.

Zur Inbetriebsetzung einer numerisch gesteuerten Werkzeugmaschine gehört die Inbetriebnahme der Regelkreise der einzelnen Servoantriebe (vgl. z.B. DE-PS 23 62 961). Die Optimierung der Regelparameter, wie z.B. Verstärkung und Nachstellzeit, nach bestimmten Einstellvorschriften erfordert qualifiziertes Service-Personal und ist relativ zeitaufwendig. Zudem kann nicht immer vollständig sichergestellt werden, daß auch tatsächlich die optimalen Regelparameter eingestellt sind und damit das Gesamtsystem statisch und dynamisch optimal ausgenutzt wird.

Moderne numerische Werkzeugmaschinensteuerungen besitzen ein hohes Rechenpotential, das insbesondere bei der Inbetriebnahmephase brachliegt und deshalb für andere Zwecke frei verfügbar wäre. Es ist daher möglich, die vorhandene Rechenkapazität zur Inbetriebnahme selbst, insbesondere zur automatischen Regleroptimierung einzusetzen.

Die Aufgabe der vorliegenden Erfindung besteht darin, ein Verfahren anzugeben, mit dem eine derartige Regleroptimierung selbsttätig möglich ist.

Diese Aufgabe wird erfindungsgemäß durch folgende mit Hilfe der Rechnersteuerung ausgeführte Schritte gelöst:

Ch 2 Sie / 13.07.1984

a) es werden der Strecke ein definierter Sollwertverlauf vorgegeben und aus der erfaßten Streckenantwort die Streckenparameter bestimmt,

b) aus einer gewünschten Zielantwort des geschlossenen Regelkreises werden ein mit den Streckenparametern verträglicher zugeordneter Sollwertverlauf und vorläufige Regelparameter für den Regler berechnet,

c) der geschlossene Regelkreis wird mit Hilfe der Strecken- und Regelparameter simuliert und die simulierte Streckenantwort mit der gewünschten Zielantwort beim vorgegebenen Sollwertverlauf verglichen,

d) der Vorgang wird unter gezielter Veränderung der Regelparameter solange wiederholt, bis Strecken und Zielantwort übereinstimmen und

e) die so optimierten Regelparameter werden zur Einstellung des Reglers der realen Strecke benutzt.

Die Antwort der realen Regelstrecke auf einen vorgegebenen Sollwertverlauf kann dann anhand der Zielantwort überprüft werden und bei vorgegebenen Abweichungen die Regelstrecke mit Hilfe der realen Strecke weiter optimiert werden. Eine Simulation ist dann nicht mehr erforderlich, da angenommen werden darf, daß die Regelparameter bereits genügend nahe am Optimum liegen, so daß eine Gefährdung der Strecke auszuschließen ist.

Zur Simulation der Strecke wird mit Vorteil die aus der Streckenantwort bestimmte Gewichtsfolge benutzt. Anstelle der Gewichtsfolge könnte auch eine diskrete Differenzengleichung zur Beschreibung der Strecke verwendet werden, die z.B. mit Hilfe der Methode der kleinsten Quadrate aus der Streckensprungantwort berechnet wird. Dies hat den Vorteil einer kürzeren Rechenzeit gegenüber der Verwendung der Gewichtsfolge und Faltungssumme, jedoch den Nachteil, daß von vornherein eine Annahme über die Streckenordnung getroffen werden muß, was in vielen Fällen zu Näherungen führt.

Die vorstehend beschriebenen Vorgänge werden vollautomatisch programmgesteuert durch die Rechnersteuerung ausgeführt, so daß die Inbetriebnahme und Optimierung der Regelkreise völlig automatisch, ohne jeglichen Eingriff von Bedienungspersonal zustande kommt. Dies führt zu einer ganz erheblichen Verkürzung der Inbetriebnahmezeit.

Bei der heute üblichen Systemstruktur der kaskadierten Regelung (Lageregelung mit unterlagerter Drehzahl- und Stromregelung) können die einzelnen Regelkreise dann unabhängig voreinander - von innen nach außen - nach den vorstehend beschriebenen Verfahrensschritten optimiert und in Betrieb genommen werden. Das Vorgehen ist dabei im Prinzip für alle Regelschleifen identisch. Ähnliche Prinzipien lassen sich jedoch auch für Regelungen, die nicht mit einzelnen unterlegten Regelkreisen aufgebaut sind, anwenden.

Anhand eines in der Zeichnung dargestellten Ausführungsbeispiels, das die Optimierung eines Drehzahlregelkreises beschreibt, sei die Erfindung näher beschrieben; es zeigen:

Figur 1 die Regelstrecke,

Figur 2 die zur Ermittlung der Streckenantwort vorausgesetzte Struktur,

Figur 3 die Ermittlung der Streckenparameter aus der Sprungantwort,

Figur 4 eine gewünschte Zielantwort (Zielfunktion) und

Figur 5 die Ermittlung der Regelparameter anhand des simulierten Regelkreises.

Wie aus Figur 1 ersichtlich, ist der bekannten Rechnersteuerung 1 der numerisch gesteuerten Werkzeugmaschine ein Drehzahlregler 2 und ein Stromregler 3 zugeordnet.
Der Einfachheit halber ist der auch noch zusätzlich vorhandene Lageregler nicht gezeichnet; er ist im Regelfall digital ausgeführt und Bestandteil der Rechnersteuerung 1. Dies gilt ebenso mit Vorteil für den Drehzahlregler 2, der nur der Übersichtlichkeit halber herausgezeichnet ist. Über die Regler 2 und 3 wird ein den Gleichstrommotor 5 speisender Stromrichter 4 ausgesteuert. Der Motor 5 treibt z.B. einen Vorschubschlitten der Werkzeugmaschine in einer Koordinatenrichtung an. Durch die Rückführung von Stromistwert $i_{ist}$ und Drehzahlistwert $n_{ist}$ werden die entsprechenden Regelkreise geschlossen.

Die vorstehend geschilderte Struktur ist bei Werkzeugmaschinenantrieben üblich und bekannt.

Es wird nun zunächst die Sprungantwort der Strecke in der Weise aufgenommen, daß die Steuerung 1 einen Sollwertsprung $i_{soll}$ auf die tatsächliche Strecke gibt. Die Strecke 6 ist dabei im Ersatzschaltbild nach Figur 2 durch die Ersatzzeitkonstante des Stromregelkreises Tersi und die mechanische Zeitkonstante des Antriebes $T_{mech}$ charakterisiert.

Aus dem sich am Ausgang der Strecke ergebenden Drehzahlistwert $n_{ist}$ werden dann in bekannter Weise die physikalischen Streckenparameter gemäß Figur 3 ermittelt.

Sei z.B. die in Figur 4 angegebene Zielantwort (Zielfunktion) des geschlossenen Regelkreises gewünscht, so kann mit Hilfe der physikalischen Streckenparameter der zugehörige, physikalisch sinnvolle Sollwertverlauf und eine geeignete Kombination von Reglerparametern berechnet werden. Die Reglerparameter können z.B. mit Hilfe der Doppelverhältnisse bestimmt werden.

Ferner wird nach folgender Beziehung die Gewichtsfolge
bestimmt:

$$g\,(k) = n_{ist}\,(k) - n_{ist}\,(k-1).$$

wobei k der Abtastzeitpunkt der Regelung ist.
Über die Faltungssumme ergibt sich die Streckensimulation gemäß nachstehender Formel:

$$n_{ist}\,(k) = \sum_{v=0}^{k} i_{soll}\,(v) \cdot g\,(k-r)$$

Die Simulation mit der Faltungssumme erfordert dabei
keine Annahme über den Aufbau der Streckenanordnung und
ergibt eine nahezu exakte Nachbildung der Strecke. Außerdem ergeben sich keine ungünstigen mechanischen Belastungen bei nicht optimalen Regelparametern. Eine Simulation ist schneller möglich als in Echtzeit.

Mit den vorliegenden Daten kann der Regelkreis simuliert
werden, wie in Figur 5 näher dargestellt. Der simulierte Regelkreis 7 besteht dann aus dem simulierten Drehzahlregler 71, dessen Regelparameter, wie z.B. Verstärkung und Nachstellzeit, gezielt veränderbar sind und
aus der Streckennachbildung mit Gewichtsfolge 75 und
Faltungssumme 72. Anhand des Regelkreises 7 wird überprüft, welcher Drehzahlistwertverlauf sich bei vorgegebenen Drehzahlsollwertverlauf ergibt, wobei der Regelkreis durch die Rückführung des Drehzahlistwertes
geschlossen ist. Gleichzeitig wird drehzahlsollwertabhängig die Zielantwort (Zielfunktion) aktiviert, die
z.B. in einer Tabelle 73 abgespeichert ist. Wunschantwort und tatsächliche Antwort des Regelkreises werden
miteinander verglichen und die Abweichung e dazu benutzt, um über eine Reglereinstellung 74 die Regelparameter gezielt so zu verändern, daß die Abweichung zwischen simulierten Istwert und gewünschten Istwert möglichst gering wird. Dies kann z.B. dadurch geschehen,
daß ein Algorithmus der Weise gewählt wird, daß die
Summe der Absolutbeträge der Abweichungen e bei nach-

0170924

- 6 -    VPA  84 P 3274 E

einanderfolgenden Rechnerschritten zu einem Minimum wird.
Derartige Suchstrategien, z.B. Vektorsuchverfahren, sind
bekannt.

Nach jeder Parametervariation wird dann ein erneuter
Simulationslauf gestartet. Erscheinen die so ermittelten Regelparameter ausreichend optimal, so werden diese
Parameterwerte - wie durch die Linien 11, 12 in Figur 1
angedeutet - in den realen Regelkreis übernommen. Anschließend wird das Verhalten dieses realen Regelkreises mit der Zielantwort verglichen. Falls das Verhalten
zufriedenstellend ist, kann hiermit die Optimierung beendet werden.

Falls das Verhalten der realen Regelstrecke noch nicht
zufriedenstellend sein sollte, kann anhand der realen
Strecke weiter optimiert werden. Eine Verwendung der
realen Strecke ist jetzt möglich, da angenommen werden
darf, daß die Regelparameter bereits genügend nahe am
Optimum sind, so daß eine Gefährdung der Strecke auszuschließen ist. Anhand der realen Strecke werden dann
die Regelparameter gezielt solange verändert, bis ein
Optimum erreicht ist.
Bei Strecken mit sich laufend verändernden Parametern,
wie z.B. Robotern, kann mit Hilfe einer Differenzengleichung vorgegebene Ordnung ständig nachoptimiert
werden. Hierbei ist die Differenzengleichung fortlaufend
den sich ändernden Parametern anzupassen, z.B. unter Benutzung der Methode der kleinsten Quadrate.

4 Patentansprüche
5 Figuren

Patentansprüche

1. Verfahren zur Regleroptimierung für Antriebe bei Werkzeugmaschinen oder dergleichen mit Rechnersteuerung, g e k e n n z e i c h n e t durch folgende, mit Hilfe der Rechnersteuerung (1) ausgeführte Schritte:

a) es werden der Strecke (6) ein definierter Sollwertverlauf vorgegeben und aus der erfaßten Streckenantwort die Streckenparameter (Tersi, Tmech) bestimmt,

b) aus einer gewünschten Zielantwort des geschlossenen Regelkreises werden ein mit den Streckenparametern verträglicher Sollwertverlauf und vorläufige Regelparameter für den Regler (71) berechnet,

c) der geschlossene Regelkreis (7) wird mit Hilfe der Strecken- und Regelparameter simuliert und die simulierte Streckenantwort mit der gewünschten Zielantwort beim vorgegebenen Sollwertverlauf verglichen,

d) der Vorgang wird unter gezielter Veränderung der Regelparameter solange wiederholt, bis Strecken- und Zielantwort übereinstimmen und

e) die so optimierten Regelparameter werden zur Einstellung des Reglers (2) der realen Strecke benutzt.

2. Verfahren nach Anspruch 1, d a d u r c h g e - k e n n z e i c h n e t, daß die Antwort der realen Regelstrecke anhand der Zielantwort überprüft wird und daß bei vorgegebenen Abweichungen die Regelparameter an der realen Strecke optimiert werden.

3. Verfahren nach Anspruch 1, d a d u r c h g e - k e n n z e i c h n e t, daß zur Simulation der Strecke eine aus den Streckenparametern bestimmte Gewichtsfolge benutzt wird.

- 8 -    VPA 84 P 3274 E

4. Verfahren nach Anspruch 1, d a d u r c h   g e -
k e n n z e i c h n e t,   daß zur Simulation der
Strecke eine Differenzengleichung vorgegebener Ordnung
benutzt wird.

Europäisches
Patentamt

**EUROPÄISCHER RECHERCHENBERICHT**

0170924

Nummer der Anmeldung

EP 85 10 8603

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | EP-A-0 056 437 (SIEMENS)<br>* Seite 4, Zeile 16 - Seite 5, Zeile 37; Seite 9, Zeile 22 - Seite 10, Zeile 7 *<br><br>--- | 1 | H 02 P 7/00<br>G 05 B 19/405 |
| A | US-A-4 432 439 (CAPUTO et al.)<br><br>----- | | |

RECHERCHIERTE
SACHGEBIETE (Int. Cl.4)

H 02 P
G 05 D
G 05 B

Der vorliegende Recherchenbericht wurde für alle Patentansprüche erstellt.

| Recherchenort | Abschlußdatum der Recherche | Prüfer |
|---|---|---|
| DEN HAAG | 18-10-1985 | KERN H. |

KATEGORIE DER GENANNTEN DOKUMENTEN
X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
  nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82